(19)

Europäisches
Patentamt
European
Patent Office
Office européen
des brevets

(11) **EP 2 338 047 B1**

(12) **EUROPEAN PATENT SPECIFICATION**

(45) Date of publication and mention
of the grant of the patent:
**27.03.2019 Bulletin 2019/13**

(51) Int Cl.:
***G01N 29/032*** *(2006.01)*   ***G01N 29/22*** *(2006.01)*
***G01N 29/48*** *(2006.01)*

(21) Application number: **09748261.6**

(22) Date of filing: **22.09.2009**

(86) International application number:
**PCT/EP2009/062263**

(87) International publication number:
**WO 2010/034713 (01.04.2010 Gazette 2010/13)**

(54) **METHOD AND DEVICE FOR DETERMINING CHARACTERISTICS OF A MEDIUM**

VERFAHREN UND VORRICHTUNG ZUR BESTIMMUNG DER EIGENSCHAFTEN EINES MEDIUMS

PROCÉDÉ ET DISPOSITIF POUR DÉTERMINER DES CARACTÉRISTIQUES D'UN MILIEU

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **26.09.2008 DE 102008049295
03.09.2009 EP 09169414**

(43) Date of publication of application:
**29.06.2011 Bulletin 2011/26**

(73) Proprietor: **Diehl Metering GmbH
91522 Ansbach (DE)**

(72) Inventors:
 • **MÜNCH, Michael
  96049 Bamberg (DE)**

 • **FAUSTMANN, Hendrik
  74613 Öhringen (DE)**
 • **SPRINGER, Martin
  96450 Coburg (DE)**
 • **LINDNER, Gerhard
  96450 Coburg (DE)**

(74) Representative: **Diehl Patentabteilung
c/o Diehl Stiftung & Co. KG
Stephanstrasse 49
90478 Nürnberg (DE)**

(56) References cited:
 **EP-A2- 0 212 470   WO-A2-02/077635
 WO-A2-2008/034878**

EP 2 338 047 B1

## Description

The invention relates to a method and a device for determining characteristics of a medium, for example physical or chemical properties of the medium. According to the invention, an acoustic waveguide comprising a side structure that delimits an interior space filled with the medium is used. Acoustic waves are excited in the waveguide side structure by means of a transmitter and characteristics of the medium are determined from a signal generated by a receiver upon receipt of acoustic waves evoked by the transmitter.

The invention may be used to determine characteristics of a medium in the form of a liquid and/or a soft material. A "soft material" comprises, for example, a (e.g. biological) tissue or a gel, i.e. in particular a material having similar velocities of sound as a liquid and in which mainly longitudinal acoustic modes are excited.

In particular, if the liquid or soft material contained in the interior space of the waveguide allows only for a propagation of sound by longitudinal sound waves, then the energy associated with surface acoustic waves excited in the side structure of the waveguide and e.g. propagating along the inner surface of the side structure is at least partly coupled into the medium contained in the interior space of the waveguide provided that the velocity of sound in the medium is smaller than the velocity of sound of the acoustic waves in the waveguide side structure. This condition can be fulfilled for a number of combinations of a liquid or soft matter (such as water, oil, gum) interfacing e.g. a solid material (such as e.g. glass or steal) used for the side structure of the waveguide.

The volume sound waves are coupled into the medium to be characterized under an angle $\Theta$ (the so-called Rayleigh angle) with respect to a vertical reference line of the inner surface of the waveguide

$$\Theta = \arcsin (c_M/c_S),$$

wherein $c_M$ is the velocity of sound of the volume sound waves within the medium to be characterized and cs is the velocity of sound of the acoustic waves in the side structure of the acoustic waveguide.

Thus, if the above mentioned condition is met, at least a part of the energy associated with the acoustic waves excited in the side structure by the transmitter is converted into volume sound waves of the medium (mode conversion) and at least a part of the energy associated with these induced volume sound waves are reconverted into acoustic wave energy of the wave guide side structure thereby generating acoustic waves in the waveguide side structure. Thus, the receiver may receive both, acoustic waves that are transmitted directly via the waveguide side structure and acoustic wave that result from converting acoustic waves in the side structure into volume sound waves and reconverting the sound waves. The acoustic waves excited in the waveguide side structure, the volume sound waves in the medium created by conversion of the waves in the side structure and the waves propagating in the side structure created by reconversion of volume sound waves are referred to as waves "evoked by the transmitter".

A method for determining chemical and physical properties of a liquid is described for example in US 6,513,365 B1. Further, WO 2008/034878 A2 discloses a method for determining properties of a medium, wherein surface acoustic waves are excited in an acoustic waveguide. Moreover, WO 02/077635 A2 describes a method for determining constituent fluids in a pipe by generating sonic waves using two transducers mounted on a pipewall. A method for determining fluid characteristics using acoustic waves is known from EP 0 212 470 A2.

It is an object of the invention to provide a method and a device for determining characteristics of a medium with higher sensitivity and accuracy.

This is achieved by choosing the thickness of the waveguide side structure and the frequency of the acoustic waves excited on the waveguide side structure in such a way that a first wave mode evoking a first signal of the receiver and a second wave mode evoking a second signal of the receiver are excited in the waveguide side structure, wherein the phase velocities of the first and the second wave mode are different, and wherein characteristics of the medium are determined using the first and the second signal.

Thus, the excitation signal (emitted by the transmitter) generates two different acoustic wave modes in the waveguide side structure evoking at least two distinct acoustic waves which are detected by the receiver, wherein the distinct waves, for example, differ with respect to their amplitudes and their time of arrival at the receiver. The difference of the amplitudes and the arrival times result from the dispersion properties of the waveguide side structure material, i.e. the relation between the phase velocity of an acoustic wave in the waveguide side structure and the thickness of the waveguide side structure and the frequency of the waves excited in the side structure.

More particularly, the phase velocity (above labelled "cs") of the wave modes in the side structure depends on the frequency-thickness product, the phase velocity and thus the Rayleigh angle being different for the first and the second wave mode excited in the waveguide side structure. Examples of dispersion curves for different wave modes propagating in a waveguide side structure material will be discussed further below.

Due to dispersion effects thus both the velocity of the two wave modes in the waveguide side structure and the conversion into volume sound waves in the medium will be different for the two modes such that at least to different acoustic waves will arrive at the receiver and thus at least two different signals will be generated by the receiver. For example, the amplitude difference between the first and the second signal and/or the time delay between the first and the second signal can be used to determine characteristics of the medium arranged within the waveguide.

Furthermore, as the course of the dispersion curves, i.e. the derivatives of the dispersion curves, associated with the first and the second mode are different, changes of the properties of the medium will affect the phase velocities and the mode conversion, i.e. the first and the second receiver signal, in a different manner. Thus, changes of properties of the medium (e.g. a density or a density distribution) can be monitored over time. For this, a first and a second wave mode is created at a first point in time and the corresponding receiver signals are evaluated and a first and a second wave mode is created at a second point in time and the corresponding receiver signals are evaluated. Of course, a series of more than two sets of receiver signals can be generated to monitor the time dependence of characteristics of the medium.

It is noted, that the invention is not confined to certain dimensions or geometries of the waveguide side structure (i.e. of the outer side wall of the waveguide). Rather, the dimension or geometry of the side structure can be chosen according to the desired application, wherein at least a part of the waveguide side structure that is excited by the transmitter and which induces acoustic sound waves in the medium to be characterized is configured (i.e. has the required thickness) such that two different acoustic wave modes are excited within that portion of the waveguide side structure. In other words, the waveguide side structure may have portions with different thicknesses and not necessarily all portions of the waveguide side structures are configured to carry different acoustic wave modes.

For example, the waveguide side structure can be a continuous structure, such as a hollow cylindrical structure (having, for example, a constant thickness). However, it is also possible that the portions of the waveguide side structure in which acoustic waves are excited (either directly by the transmitter or by convertion of sound waves in the medium to be characterized) are separate parts or parts that are connected by connecting means.

For example, the method according to the invention can be used supplementary with existing conducts or containers such as pipes, vessels or other hollow containers in which the medium to be characterized is located, wherein a direct contact of the transmitter or the receiver with the medium is avoided. For example, the transmitter and the receiver are (e.g. detachably) fixed to an existing waveguide (such as a pipe, vessel or another hollow container), e.g. by using an adhesive (in particular an ultrasonic adhesive). These existing conducts or containers do not necessarily have to comprise or consist of a piezoelectric Material as the transmitter is configured to excite waves also in non-piezoelectric materials.

However, it is also conceivable that a particular acoustic waveguide is used in order to determine characteristics of the medium. Such a waveguide may be equipped with connecting means (e.g. a flange structure) permitting the waveguide to be connected to an existing conduct or container. Also, the waveguide can be filled with the medium to be characterized or dipped into the medium.

According to another embodiment of the invention, the thickness of the waveguide side structure is such that the acoustic waves excited in the waveguide side structure comprise movement of both the inner and the outer surface of the waveguide side structure.

For example, the thickness of the waveguide side structure and the frequency of the excited waves in the waveguide side structure are such that concurrent surface acoustic waves propagating on both the inner and the outer surface of the waveguide side structure are excited. In particular, the first and/or the second wave mode excited in the waveguide side structure are Lamb waves or Lamb-Rayleigh waves (i.e. waves in the transition regime between Lamb and Rayleigh waves).

In the case of Lamb waves or Lamb-Rayleigh-waves the displacement of the inner and the outer surface of the waveguide side structure excited by the transmitter is correlated such that, in particular, the amplitude and/or the phases of the displacement movement of the inner and outer surfaces of the side structure are interrelated.

For example, the excited wave modes will be mainly or only Lamb waves if the thickness of the waveguide side structure is substantially smaller than the wave length of the excited wave modes. However, as set forth above, also a transition type of Lamb waves and Rayleigh waves can be used, i.e. the thickness of the waveguide side structure can be of the same order of magnitude as the wave length of the excited waves. In that case there can still be a correlation between the displacement movement of the inner and the outer surface (e.g. of the outer atomic layers of the inner and the outer surfaces) of the waveguide side structure.

For example, wave modes are excited in the waveguide side structure having a frequency in the range from 200 kHz to 200 MHz and the thickness of the waveguide side structure is in the range from 10 $\mu$m to 10 mm, the thickness depending on the chosen frequency.

In another example, the thickness of the waveguide side structure and the frequency of the waves excited in the side structure are chosen in such a way that the first wave mode is an acoustic wave that causes the inner surface and the outer surface of the waveguide side structure to move in opposite directions perpendicular to the propagation direction of the first wave mode. Here, the displacement movements of the inner and the outer surface of the waveguide side structure are contemplated at the same position on the propagating direction (i.e. at the same distance from the transmitter). For example, the first wave mode is a symmetric Lamb or Lamb-Rayleigh wave mode.

According to another embodiment of the invention, the thickness of the waveguide side structure and the frequency of the excited waves is chosen in such a way that the second wave mode is a wave that causes the inner surface and the outer surface of the waveguide side structure to move in the same direction perpendicular to the propagation direction of the second wave mode. Again, the displacement movements of the inner and the outer surface are contemplated at the same location on the propagation direction. For example, the second wave mode is an asymmetric Lamb or Lamb-Rayleigh wave mode.

In another example of the invention, the thickness of the waveguide side structure and the frequency of the acoustic waves excited in the waveguide side structure are chosen in such a way that the slope of the dispersion curve associated with the first wave mode is different from the slope of the dispersion curve associated with the second wave mode. In particular, the slope of the dispersion curve associated with the first wave mode is negative and the slope of the dispersion curve associated with the second wave mode is positive.

For example, the first wave mode is a symmetric Lamb wave mode and the second wave mode is an asymmetric Lamb wave mode, wherein the thickness and the frequency are set in such a way that the slope of the dispersion curve associated with the symmetric Lamb wave mode is negative, whereas the slope of the dispersion curve associated with the asymmetric Lamb wave mode is positive. For example, the frequency-thickness product is in the region between 2.5 and 4 MHz mm.

For example, the frequency-thickness product is such that only fundamental wave modes are excited in the waveguide side structure. However, other frequency-thickness products can be used such that also higher modes are excited. It is also noted that the first and the second wave mode excited in the waveguide side structure do not necessarily have to be a symmetric and a symmetric wave mode, respectively. Rather, it is also possible that signals of the receiver are evaluated that are associated with other mode combinations, for example the amplitude and/or the time delay between a fundamental and a higher order mode can be used. Also, more than two wave modes can be excited in the waveguide side structure and the associated receiver signals can be evaluated in order to determine the characteristics of the medium.

According to another embodiment of the invention, the waveguide side structure comprises a plate in which the first and the second acoustic wave mode are excited by the transmitter. In particular, an (inner) surface of the plate forms a section of the inner surface of the waveguide side structure, wherein the transmitter is arranged at an outer surface of the plate, the inner surface facing towards the interior space of the waveguide and outer surface facing away from the inner surface of the plate.

For example, the transmitter is connected to the outer surface of the plate by connection means (such as e.g. an adhesive). It is, however, not excluded that the transmitter is at least partially arranged within the plate (e.g. embedded in the plate). A "plate" may have flat and parallel side walls. However, instead of a plate having flat and parallel side walls, an element could be used which comprises at least one surface that does not run parallel to its opposite surface and which might not extend flatly (but, for example, sinuously). For example, the element has the form of the wedge, wherein its thickness increases or decreases in propagation direction of the waves excited by the transmitter.

The receiver may be arranged together with the transmitter at the outer surface of the plate. Using that waveguide configuration waves are initially coupled into the plate by the transmitter, at least partially converted into sound waves of the medium to be characterized and at least partly reconverted into acoustic waves of the plate which are finally detected by the receiver.

In another configuration, the waveguide side structure comprises a first and a second plate, the two plates being arranged opposite to one another and each plate having an inner surface that forms a section of the inner surface of the waveguide structure. For example, the two plates are arranged parallel and might be identical regarding their material and geometry. The transmitter may be arranged at an outer surface of the second plate, whereas the receiver may be arranged at an outer surface of the first plate. It is also possible that a further receiver is arranged on the outer surface of the first or the second plate, the (first) receiver first and the further (second) receiver being arranged with a distance from one another.

As to using the first and second signal in order to determine characteristics of the medium, the time delay between the first and the second signal may be determined and evaluated. Alternatively or additionally, the amplitude of the first and/or the second signal may be determined and evaluated. Also, the time delay between the first and the second signal and/or the amplitude of the first and/or the second signal can be compared with predetermined values. Such "predetermined values" might have been determined using a comparable waveguide arrangement with a medium arranged in the waveguide interior space of which the properties or at least some of the properties are known, i.e. the waveguide arrangement is calibrated.

Also, a theoretical model of the waveguide arrangement (i.e. of the waveguide side structure and the medium) could be used, wherein parameters of the model (e.g. related to properties of the medium such as a density or a density distribution) are determined by fitting these parameters to the receiver signals.

Further, the transmitter can be configured to generate acoustic pulses such that pulsed acoustic waves are excited in the waveguide side structure and consequently a sequence of first and second signals may be generated by the receiver.

For example, the propagation time between the transmission of an acoustic pulse and the arrival of acoustic waves evoked by the transmitter pulses (i.e. the generation of the first and/or the second signal) can be determined in order to determine characteristics of the medium.

According to another embodiment of the invention, the thickness of the waveguide side structure and the frequency of the acoustic waves excited in the waveguide side structure are chosen in such a way that the propagation velocity of the first wave mode compares to the sound velocity of the medium, wherein a first acoustic wave is excited in the waveguide side structure at a first point in time and least a part of the energy associated with the first acoustic wave is converted into a volume sound wave of the medium, and a second acoustic wave is excited in the waveguide side structure at a second point in time, wherein no energy associated with the second acoustic wave is converted into a volume sound wave (the first and the second wave having the same frequencies).

In other words, the sound velocity of the medium to be characterized is only slightly smaller than the phase velocity of at least the first wave mode. In that case the Rayleigh angle, which as mentioned above depends on both the speed of sound in the medium and the velocity of the excited waves, will be near 90°. If the Rayleigh angle was exactly 90° no signal associated with mode conversion would be generated by the receiver as no acoustic wave energy would be coupled from the waveguide side structure into the medium and arrive at the receiver. Carrying out the claimed method at a Rayleigh angle near 90° may have the advantage that the sensitivity of the measurement is increased as a slight change of the properties of the medium will cause a drastic change of the receiver signal. Further variations of this embodiment are discussed below.

In another example, waves of at least two different frequencies are excited in the waveguide side structure exciting first and second wave modes of a first frequency and first and second wave modes of a second frequency, and wherein the first and second signal is associated with the first and the second frequency, respectively, are evaluated in order to determine characteristics of the medium.

According to another embodiment of the invention, in a first step the claimed method is carried out using a first waveguide having a first thickness and in a second step the method is carried out using a second waveguide having a side structure of a second thickness (different from the first thickness), wherein the first and the second receiver signals associated with the first waveguide and the first and second receiver signals associated with the second waveguide are evaluated. In particular, acoustic waves with the same frequency are excited in the waveguide structure in the first and the second step.

For example, the claimed method is used to determine a density or a density distribution, absorption properties, a temperature of the medium, a temperature gradient within the medium, changes of the temperature or temperature gradient, a viscosity of the medium, a viscosity gradient and/or changes of the viscosity or viscosity gradient. Further, a mass flow of the medium could be determined. Also, the sound velocity and the acoustic impedance of the medium as well as the presence and properties of gas bubbles in the medium can be determined.

The invention also relates to a device for determining characteristics of a medium, which in particular is suited for carrying out the method as described above, wherein the thickness of the waveguide side structure and the frequency of the acoustic waves excited in the waveguide side structure are chosen in such a way that a first wave mode evoking a first signal of the receiver and a second wave mode evoking a second signal of the receiver are excited in the waveguide side structure, wherein the phase velocities of the first and the second wave mode are different. The device further comprises evaluation means for determining characteristics of the medium evaluating the first and the second signal.

According to an embodiment of the device, the waveguide side structure comprises a portion that is excited by the transmitter, wherein the thickness of the excited portion is essentially constant. The waveguide side structure, as already explained above, does not have to be a homogeneous structure having a constant thickness throughout the side structure, but can also have sections with different thicknesses. Thus, at least one portion of the side structure has a constant thickness, whereas the remaining part of the waveguide side structure has a different thickness. Of course, it is also possible that the complete waveguide side structure has a constant thickness or that the thickness varies across the whole structure.

In another example, the waveguide side structure comprises a portion that is excited by the transmitter, wherein the excited portion has at least a first and a second thickness, wherein the velocity of the excited first and second wave mode excited in the area of the first thickness is different from the velocity of the first and second wave mode excited in the area of the second thickness. This is due to the dispersion properties of the waveguide side structure material as different frequency-thickness products result in different phase velocities.

For example, the thickness of the excited portion of the waveguide side structure is constant in a direction perpendicular to the propagation direction of the first and the second wave mode. This means that the thickness does not vary perpendicular to the propagation direction but it varies along the propagation direction. In particular, the thickness might vary continuously or step-like.

Also, the thickness of the excited portion of the waveguide side structure can be constant in a direction parallel to the propagation direction of the first and the second wave mode. According to that example, the thickness thus varies perpendicular to the propagation direction. For example, the thickness of the excited portion of the waveguide side structure increases perpendicular to the propagation direction.

In another example, the thickness varies periodically (in a direction perpendicular and/or parallel to the propagation direction), e.g., the inner and/or the outer surface of the excited portion of the waveguide side structure is sinuously formed. A non-uniform thickness of the waveguide side structure may intensify a present gradient in the medium (e.g. a concentration gradient).

The excited portion of the waveguide side structure may comprise a plate having an inner surface that forms a section of the inner surface of the waveguide side structure (and thus facing toward the interior space of the waveguide), wherein the transmitter is arranged at an outer surface of the plate, the outer surface facing away from the inner surface of the plate.

In another embodiment, the waveguide side structure comprises a first and a second plate arranged opposite (and e.g. parallel) to one another, wherein the transmitter is arranged on an outer surface of the first plate and the receiver is arranged on an outer surface of the second plate. For example, the waveguide consists of the first and the second plate. However, it is also possible that the waveguide comprises further structures, e.g. for connecting the two plates and/or for confining the medium to be characterized.

In particular, the first and/or the second plate are formed as a wedge with increasing thickness along the propagation direction. However, it is of course also possible that at least one of the plates is configured to have a decreasing thickness along the propagation direction. Further, the first and/or the second plate can comprise sinuously formed outer surfaces. A wedge-shaped plate or the sinuously formed plate provide a spatial variation of the phase velocity of the acoustic wave excited in the plate such that the Rayleigh angle and thus the mode convertion depends on the position on the plate, i.e. from the distance to the transmitter.

A spatially varying phase velocity of the excited waves might be used to determine properties of the medium dependent on a position in the medium with higher accuracy. For example, the plate (in particular the thickness of the plate) can be chosen to vary such that a property gradient (or properties that vary locally in another way) are matched. In particular, the plate can be configured such that the Rayleigh angle is near 90° over the whole length or at least over a section of the length of the plate (measured along the propagation direction) to enhance the sensitivity of the device.

According to another example of the invention, the plate is formed from a non-piezo electric material, in particular from a glass or a metal. Further, the transmitter and/or the receiver may comprise an interdigital piezo-electric transducer. However, the term "transmitter" is not restricted to a piezo-electric transducer. Other embodiments of the invention comprise a transmitter in the form of a (e.g. pulsed) laser that excites the acoustic wave in the side structure of the waveguide based on thermoelastic effects. Also, a wedge ("wedge converter") could be used (in particular in combination with a piezo-electric transducer) to excite the acoustic waves or a comb-like vibrator ("comb converter"). Of course different transmitter types could also be used in combination.

Embodiments of the invention will be described in more detail hereinafter with reference to the drawings, in which:

Fig. 1A    illustrates exemplary dispersion curves of a waveguide side structure;

Fig. 1B    illustrates the different propagation behaviour of two different wave modes excited in the waveguide side structure;

Fig. 2A    illustrates a device for carrying out the method according to the invention;

Fig. 2B    illustrates the device according to Fig. 2A, wherein the thickness of the waveguide side structure is smaller than in Fig. 2A;

Fig. 2C    illustrates the device according to Fig. 2A and 2B, wherein the thickness of the waveguide side structure is smaller than in Fig. 2B;

Fig. 3    illustrates a device according to another embodiment of the invention;

Fig. 4A    illustrates a device according to an embodiment of the invention;

Fig. 4B    illustrates a device according to another embodiment of the invention;

Fig. 4C    exemplarily illustrates a receiver signal with respect to arrangement according to Fig. 4B; and

Fig. 5    illustrates a portion of the waveguide side structure according to a further embodiment of the invention.

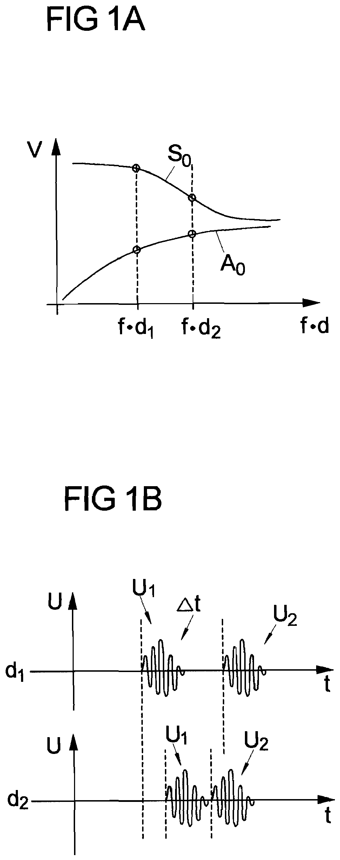

Fig. 1A depicts dispersion curves $S_0$ and $A_0$ associated with a fundamental symmetric Lamb wave and a fundamental asymmetric Lamb wave, respectively, excited in a waveguide side structure. The dispersion curves $S_0$, $A_0$ relate to the phase velocity v of the respective mode and the frequency-thickness product f * d, wherein f is the frequency of the excited wave mode and d is the thickness of the waveguide side structure.

The dispersion curve $S_0$ has a region where its slope is negative, i.e. the phase velocity decreases with increasing frequency-thickness product. The dispersion

curve $A_0$, however, increases monotonously, i.e. the phase velocity of the asymmetric wave mode increases with increasing frequency-thickness product. Therefore, the propagation time and the extent of mode conversion (i.e. the extent to which the Lamb wave modes are converted into volume sound waves) of the respective wave modes change differently if the frequency-thickness product is changed. For example, if modes are excited in the waveguide structure at a frequency-thickness product $f * d_1$ a first and a second signal $U_1$, $U_2$ are received at a receiver (see Fig. 1B). Signal $S_1$ is associated with the (pulsed) symmetric mode $S_0$ and the signal $S_2$ is associated with the (pulsed) asymmetric mode. The two signals $U_1$, $U_2$ are separated by a time delay $\Delta t$ due to the different phase velocities of the modes $S_0$ and $A_0$ at the frequency-thickness product $f* d_1$.

If the symmetric and the asymmetric modes are excited using a different frequency-thickness product $f * d_2$ the propagation time of the modes change differently. For example, as the phase velocity of the symmetric mode $S_0$ decreases this mode takes longer to propagate towards the receiver, whereas the phase velocity of the asymmetric mode increases such that the propagating time of the asymmetric mode decreases. Thus, the time delay between the two signals $U_1$, $U_2$ decreases.

Further, if the frequency-thickness product is held constant the change of properties of the medium will effect the modes $S_0$ and $A_0$ differently such that a change of properties of the medium can be determined from the change of for example the time delay between the pulsed signals $U_1$, $U_2$ and/or the difference between their amplitudes.

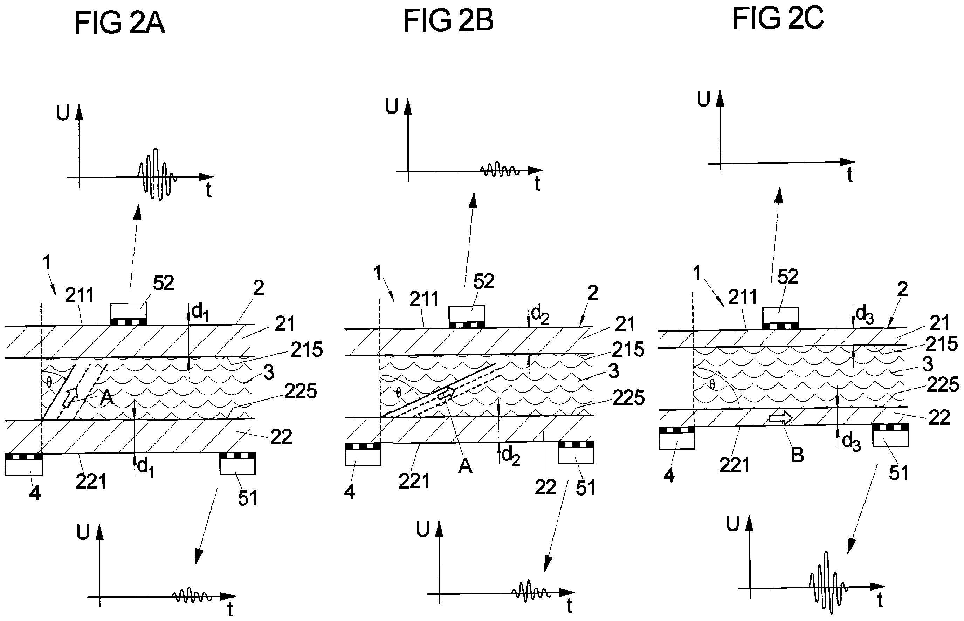

Figs. 2A to 2C relate to different configurations of a device 1 which can be used to carry out the method according to the invention. According to Fig. 2A, the device 1 comprises an acoustic waveguide 2 used to determine characteristics of a medium 3 arranged within an interior space of the waveguide 2.

The waveguide 2 comprises a waveguide side structure which in turn comprises a first and a second portion in the form of a first and a second plate 21, 22, respectively. The plates 21, 22 are arranged parallel and opposite to one another. Inner surfaces 215, 225 of the plates 21, 22 form at least a section of an inner surface of the waveguide side structure delimiting the interior space of the waveguide 2 and interfacing with the medium 3. Further, the device comprises a transmitter 4 arranged on an outer surface 221 (facing away from the interior space of the waveguide 2) of the second plate 22, the transmitter 4 being configured to excite acoustic waves, in particular in the form of Lamb or Lamb-Rayleigh waves, in the plate 22. Further, the device 1 comprises a first and a second receiver 51, 52, wherein the first receiver is located on the outer surface 221 of the second plate and the second receiver 52 is located on an outer surface 211 (facing away from the interior space of the waveguide 2) of the first plate 21.

The transmitter 4 excites acoustic waves in the plate 22 propagating along the main extension direction of the plate 22 (i.e. towards the first receiver 51). However, at least a part of the acoustic waves excited in the second plate 22 is converted into volume sound waves in the medium 3, wherein the angle under which the acoustic waves are coupled from the second plate 22 into the medium 3 (i.e. the Rayleigh angle) is denoted "$\Theta$", the sound waves induced in the medium 3 being denoted "A".

As the phase velocity depends on the frequency-thickness product associated with the second plate 22 the Rayleigh angle $\Theta$ (and thus the amount of energy converted into volume sound energy) also depends on the thickness $d_1$ of the second plate 22. For example, a plate having a thickness of about 1 mm and an excitation frequency of 1 MHz could be used. According to the configuration depicted in Fig. 2A, the second receiver 52 is positioned in such a way that the sound waves A propagate towards the receiver 52 such that a strong signal is received at receiver 52 (as illustrated by means of a signal-time-curve associated with receiver 52 also shown in Fig. 2A). On the other hand, as most of the acoustic wave energy of the wave mode excited in the second plate 22 is coupled into the medium 3 only a small signal is received at receiver 51 (as illustrated by means of a signal-time-curve associated with receiver 51) .

If the waves excited in plate 22 comprise an asymmetric Lamb wave mode, the phase velocity of the mode excited in the second plate 22 will decrease with decreasing plate thickness. A decreasing phase velocity, however, results in a larger Rayleigh angle. This situation is shown in Figure 2B, wherein the second plate 22 has a smaller thickness $d_2$ than the plate in Fig. 2A. The signal at receiver 2 decreases as the propagating direction of the volume sound waves A in medium 3 is not directed towards the receiver 52 any longer. On the other hand, a larger percentage of wave energy (indicated by arrow B) remains within the second plate 22 such that the signal at the second receiver 51 increases.

Fig. 2C illustrates the situation that the thickness of the second plate 22 (and similarly the thickness of the first plate) is even more decreased. Fig. 2C, more particularly, relates to the situation where the thickness $d_3$ of plate 22 is chosen in such a way that the phase velocity of the wave mode excited in the second plate equals the speed of sound in the medium 3 such that the Rayleigh angle becomes 90°. For example, a thickness $d_3$ of about 0.1 mm and an excitation frequency of about 1 MHz could be used. In that situation no wave energy is coupled from the second plate 22 into the medium 3 such that no signal at all is received at receiver 51 and all of the wave energy is transmitted towards the second receiver 51 via plate 22.

The configuration according to Fig. 2C could be used to provide a very sensitive determination of properties of the medium 3 as small changes of the properties might lead to drastic changes of the signals at the receiver 51, 52. Particularly, the device 1 is prepared to operate at a Rayleigh angle slightly smaller than 90° such that both changes of medium properties which increase the Rayleigh angle and changes of medium properties which decrease the Rayleigh angle can be detected sensitively.

The device 1 may in addition comprises evaluating means (not shown) which allow the evaluation of the signals generated by the first and the second receiver 51, 52 in order to determine characteristics of the medium 3. For example, the evaluating means are implemented in an electronic circuit (e.g. an IC), in particular in the form of a measurement device (such as an oscilloscope or a computer) connected to the receiver in order to register the electrical receiver signals. Further, a computer program can be used to evaluate the receiver signals registered by the measurement device.

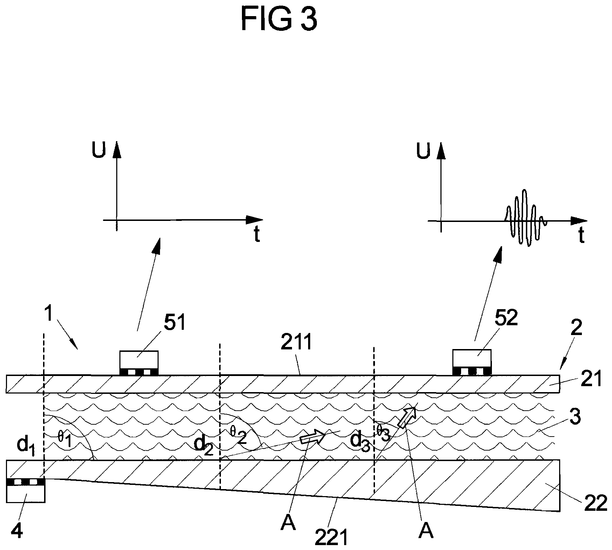

Another example of a device 1 that could be used for carrying out the method according to the invention is illustrated in Fig. 3. The device 1 comprises an acoustic waveguide 2, which analogue to Figs. 2A to 2C comprises two side structure elements 21, 22 arranged opposite to one another. In contrast to Figs. 2A to 2C, the second element 22 has the form of a wedge, wherein its thickness increases along the propagating direction of the wave modes excited in the element 22 by transmitter 4. The transmitter 4 is arranged at an outer surface 221 of element 22. Further differing from Figs. 2A to 2C, the receiver is not arranged together with the transmitter on the element 22 but two receivers 51, 52 are positioned on an outer surface 211 of the first element 21, which is formed as a plate and arranged opposite to element 22.

Due to the increasing thickness of the second element 22 the Rayleigh angle $\Theta$ varies (decreases) along the propagation direction of the waves excited within the second element 22. This is indicated by three exemplary Rayleigh angles $\Theta_1$ to $\Theta_3$ at different locations on the second element 22 (having different distances from the receiver 4) associated with different thicknesses $d_1$ to $d_3$ of the plate 22. In the present example, the first receiver 51 is positioned near the transmitter 4 and the thickness $d_1$ of the second element 22 in the region of the transmitter 4 is such that almost no energy is coupled from the element 22 into the medium 3 such that no acoustic signal arrives at the first receiver 51 an no signal is generated by the receiver 51.

The second receiver 52, however, is positioned with a distance from the first receiver 51 in a region where the thickness of the second element 22 is considerably larger than the thickness $d_1$. In the region of the receiver 52 (with respect to the propagation direction of the waves excited in the second plate 22) the Rayleigh angle is thus considerably smaller than near the transmitter 4 such that wave energy is coupled from the element 22 into the medium 3 and vice versa from the medium 3 into the first element 21 where it propagates towards the second receiver 52.

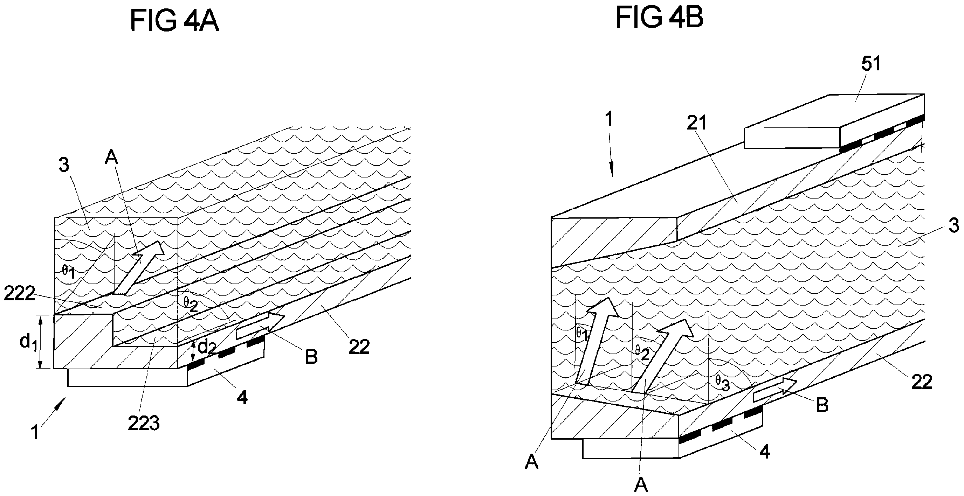

Further embodiments of a device 1 which can be used to carry out the method according to the invention are shown in Figs. 4A and 4B. According to Fig. 4A, the device 1 comprises a waveguide having an element 22 in which wave modes are excited by a transmitter 4. The element 22 extends essentially longitudinally, wherein acoustic waves (in particular Lamb waves) are excited in the element 22 that propagate along the main extension direction of the element 22 (the propagation direction being indicated by arrow B).

The element 22 basically has a plate like shape, wherein its thickness is constant along the propagation direction B of the excited acoustic waves (i.e. along its main extension). However, the thickness of the element 22 varies in a direction perpendicular to the propagation direction B. In particular, a first section 222 has a first thickness $d_1$ and a second section 223 has a second thickness $d_2$, thickness $d_2$ being smaller than thickness $d_1$. Due to the different thicknesses $d_1$ and $d_2$ different Rayleigh angles $\Theta_1$ and $\Theta_2$ are associated with the first and the second section 222, 223.

According to the present example, the thickness $d_2$ is chosen in such a way that the Rayleigh angle $\Theta_2$ is near or beyond 90° such that only a small amount or no wave energy is converted into volume sound wave energy from waves excited in section 223. However, the thickness $d_1$ is such that sound wave energy is emitted into the medium 3 under the Raleigh angle $\Theta_1$.

According to Fig. 4A, the thickness of the element 22 changes step-like perpendicular to the propagation direction, wherein according to the embodiment of Figure 4B, the thickness of the element 22 varies continuously. As in Fig. 4A, the element 22 has a constant thickness along the propagation direction A of the wave modes excited in the element 22. In addition, a further element 21 formed similarly to element 22 is arranged opposite to the element 22. It is of course not necessary that the further element is formed wedge like as element 21. For example, the further element can be formed as a plate having parallel sidewalls. A receiver 51 is arranged on the further element 22.

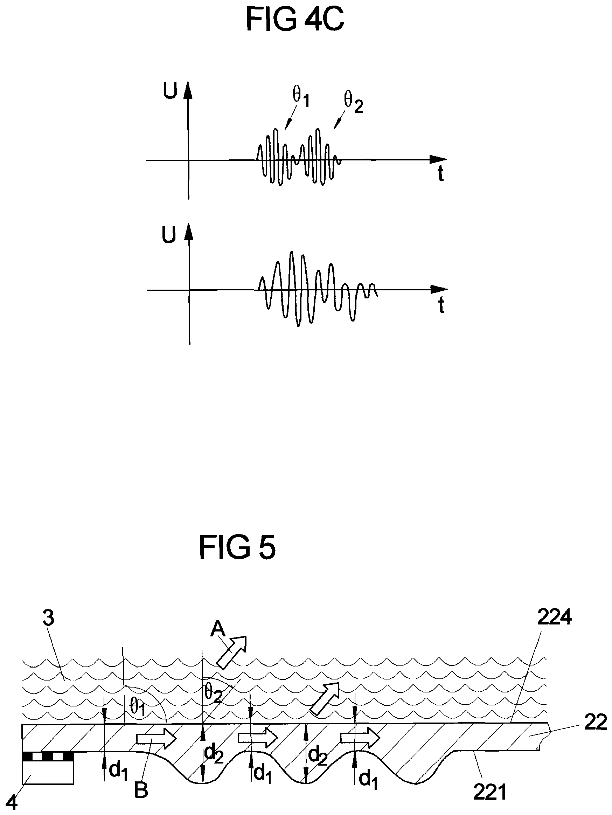

Due to the varying thickness sound waves excited in the medium 3 under different Rayleigh angles (of which three angles $\Theta_1$, $\Theta_2$, $\Theta_3$ are exemplarily shown) a superposition of different acoustic waves (having different propagation times and/or amplitudes) will arrive at receiver 51 such that a convoluted signal will be generated by the receiver 51. This is shown in Fig. 4C, wherein the illustrated upper receiver signal relates to the hypothetical situation that waves are induced in the medium under the two Rayleigh angles $\Theta_1$ and $\Theta_2$, only. The receiver signal illustrated below relates to the actual arrangement according to Fig. 4B, i.e. this receiver signal is the overall signal resulting from the different Rayleigh angles continuously varying between $\Theta_1$ and $\Theta_3$.

Vice versa, a deconvolution of such a receiver signal may give the distribution of Rayleigh angles reflecting a spatial distribution of properties of the medium. Thus, inhomogeneities of medium properties and local changes of the properties can be determined by deconvoluting the receiver signal. The particular shape (different thicknesses) of the element 22 may enhance the sensitivity and/or the accuracy of the results. However, a spatial distribution of medium properties could also be determined using a plate having flat and parallel inner and outer surfaces instead of wedge element 22.

Fig. 5 illustrates another embodiment of a device suitable for carrying out the method according to the invention. In this case, the element 22 of the waveguide side structure has a periodically varying thickness. In particular, the outer surface 221 is formed sinuously, whereas an inner surface 224 facing away from the outer surface 221 is flat.

Because of the sinuously formed outer surface, the thickness of the element 22 varies periodically along the propagation direction of waves A excited in the element 22 between a minimum value $d_1$ and a maximum value $d_2$. The minimum thickness $d_1$ could be, for example, chosen in such a way that the associated Rayleigh angle $\Theta_1$ becomes almost 90° such that almost no wave energy is transferred into the medium 3, whereas the maximum thickness is such that wave energy is converted into the medium under a Rayleigh angle $\Theta_2$ (inducing sound waves B). As a result, a grid like pattern of parallel and distinct sound beams could be produced in the medium 3 allowing e.g. the detection of spatial distributions of medium properties or to restrict the testing of the medium to certain areas, i.e. it is possible to scan or sample the medium.

It is noted that the different possibilities of varying the thickness of the waveguide side structure (or at least of a portion of the waveguide side structure) as shown in Figs. 3 to 5 could also be combined. Also, the thickness variation could be two- or three-dimensional, i.e. the thickness of the waveguide side structure may depend on two or three space coordinates such that spatial distributions of medium properties could also be determined in two or three dimensions with high sensitivity or the medium could be sampled in three space coordinates. For example, a grid of could be induced such that the medium is probed mainly in the area of that maximal sound energy.

For example, the thickness of the waveguide side structure could be varied in three dimensions if the waveguide side structure comprises a first element extending along a first plane and having a varying thickness in both a direction perpendicular to the propagation direction and along the propagation direction, and a second element extending along a plane perpendicular to the first plane and having a thickness varying in a direction perpendicular to the first plane. Also, the devices illustrated in Fig. 3 to 5 could be configured in such a way that at least a first and a second wave mode are excited in the waveguide side structure.

**Claims**

1. A method for determining characteristics of a medium, comprising the steps of:

   a) providing an acoustic waveguide (2) having a side structure (21, 22) delimiting an interior space filled with the medium (3) to be characterized such that an inner surface (215, 225) of the side structure (21, 22) forms an interface with the medium (3),
   b) exciting acoustic waves (B) in the waveguide side structure by means of at least one transmitter (4),
   c) converting at least a part of the energy associated with the acoustic waves (B) excited in the side structure into volume sound waves (A) of the medium (3),
   d) reconverting at least a part of the energy associated with the volume sound waves (A) into acoustic wave energy of the wave guide side structure (21, 22) thereby generating acoustic waves in the waveguide side structure,
   e) receiving acoustic waves (A, B) evoked by the transmitter (4) by at least one receiver (51),
   f) determining characteristics of the medium (3) from a signal (U) generated by the receiver (51, 52) upon receipt of acoustic waves (A, B) evoked by the transmitter (4),

   **characterized in that**
   the thickness ($d_1$, $d_2$, $d_3$) of the waveguide side structure (21, 22), defined as the distance between the inner surface (215, 225) and an outer surface (211, 221) of the waveguide side structure, and the frequency (f) of the acoustic waves (B) excited in the waveguide side structure (21, 22) are chosen in such a way that a first wave mode evoking a first signal of the receiver (51, 52) and a second wave mode evoking a second signal of the receiver (51) are excited in the waveguide side structure (21, 22), wherein the phase velocities of the first and the second wave mode are different, and characteristics of the medium (3) are determined using the first and the second signal.

2. The method as claimed in claim 1, **wherein** the first wave mode is a wave that causes the inner surface and the outer surface (215, 225, 211, 221) of the waveguide side structure (21, 22) to move in opposite directions perpendicular to the propagation direction of the second wave mode.

3. The method as claimed in one of the preceding claims, **wherein** the first wave mode is a symmetric Lamb or Lamb-Rayleigh wave mode and the second wave mode is an asymmetric Lamb or Lamb-Rayleigh wave mode.

4. The method as claimed in one of claim 1, **wherein** the second wave mode is a wave that causes the inner surface and the outer surface (215, 225, 211, 221) of the waveguide side structure (21, 22) to move in the same direction perpendicular to the propagation direction of the first wave mode.

5. The method as claimed in one of the preceding claims, **wherein** the thickness ($d_1$, $d_2$, $d_3$) of the waveguide side structure (21, 22) and the frequency (f) of the acoustic waves excited in the waveguide side structure are chosen in such a way that the slope of the dispersion curve associated with the first wave mode is different from the slope of the dispersion curve associated with the second wave mode.

6. The method as claimed in one of the preceding claims, **wherein** the waveguide side structure (21, 22) comprises a plate in which the acoustic wave is excited by the transmitter, wherein an inner surface of the plate forms a section of the inner surface of the waveguide side structure (21, 22) and wherein the transmitter (4) is arranged at an outer surface of the plate, the outer surface facing away from the inner surface of the plate.

7. The method as claimed in one of the preceding claims, **wherein** using the first and second signal in order to determine characteristics of the medium (3) comprises determining the time delay between the first and the second signal, determining the amplitude of the first and/or the second signal, comparing the time delay between the first and the second signal and/or comparing the amplitude of the first and/or the second signal with predetermined values, wherein, in particular, acoustic pulses are generated by the transmitter (4) such that pulsed acoustic waves are excited in the waveguide side structure (21, 22).

8. The method as claimed in one of the preceding claims, **wherein** waves of at least two different frequencies are excited in the waveguide side structure (21, 22) evoking first and second wave modes of a first frequency and first and second wave modes of a second frequency, and wherein the first and second signals associated with the first and the second frequency, respectively, are evaluated.

9. The method as claimed in one of the preceding claims, **wherein** in a first step the method is carried out using a first waveguide having a side structure (21, 22) of a first thickness and in a second step the method is carried out using a second waveguide having a side structure (21, 22) of a second thickness, wherein the first and second signals associated with the first waveguide and the first and second signals associated with the second waveguide are evaluated.

10. Device for determining characteristics of a medium and in particular for carrying out the method as claimed in one of the preceding claims, comprising

    a) an acoustic waveguide (2) having a side structure (21, 22) delimiting an interior space to be filled with the medium (3) to be characterized such that an inner surface (215, 225) of the side structure (21, 22) forms an interface with the medium (3) when arranged within the interior space,
    b) a transmitter (4) for exciting acoustic waves (B) in the waveguide side structure (21,22),
    c) a receiver (51) for receiving acoustic waves (A, B) evoked by the transmitter (4),

**characterized in that**
the thickness ($d_1$, $d_2$, $d_3$) of the waveguide side structure (21, 22) and the frequency (f) of the acoustic waves (B) excited in the waveguide side structure (21, 22) are chosen in such a way that a first wave mode evoking a first signal of the receiver (51) and a second wave mode evoking a second signal of the receiver (51) are excited in the waveguide side structure (21, 22), wherein the phase velocities of the first and the second wave mode are different, and the device (1) comprises evaluation means for determining characteristics of the medium (3) evaluating the first and the second signal.

11. The device as claimed in claim 10, **wherein** waveguide side structure (21, 22) comprises a portion (22) that is excited by the transmitter (4), wherein the excited portion (22) has at least a first and a second thickness ($d_1$, $d_2$), wherein the velocity of the excited first and second wave mode excited in the area of the first thickness ($d_i$) is different from the velocity of the first and second wave mode excited in the area of the second thickness ($d_2$).

12. The device as claimed in claim 11, **wherein** the thickness of the excited portion (22) of the waveguide side structure (21, 22) is constant in a direction perpendicular to the propagation direction of the first and the second wave mode and increases along the propagation direction.

13. The device as claimed in claim 11, **wherein** the thickness of the excited portion (22) of the waveguide side structure (21, 22) varies continuously or periodically or the excited portion (22) of the waveguide side structure (21, 22) is sinuously formed.

**Patentansprüche**

1. Verfahren zur Bestimmung von Eigenschaften eines Mediums, mit den folgenden Schritten:

a) Bereitstellen eines akustischen Wellenleiters (2) mit einer Seitenstruktur (21, 22), die einen mit dem zu charakterisierenden Medium (3) gefüllten Innenraum begrenzt, sodass eine Innenfläche (215, 255) der Seitenstruktur (21, 22) eine Grenzfläche mit dem Medium (3) bildet,
b) Anregen von Schallwellen (B) in der Seitenstruktur des Wellenleiters mit Hilfe mindestens eines Senders (4),
c) Umwandeln wenigstens eines Teils der zu den in der Seitenstruktur angeregten Schallwellen (B) gehörigen Energie in Volumenschallwellen (A) des Mediums (3),
d) Rückwandeln wenigstens eines Teils der zu den Volumenschallwellen (A) gehörigen Energie in Schallwellenenergie der Seitenstruktur (21, 22) des Wellenleiters, wodurch Schallwellen in der Seitenstruktur des Wellenleiters erzeugt werden,
e) Empfangen der von dem Sender (4) hervorgerufenen Schallwellen (A, B) durch mindestens einen Empfänger (51),
f) Bestimmen von Eigenschaften des Mediums (3) aus einem durch den Empfänger (51, 52) beim Empfang der von dem Sender (4) hervorgerufenen Schallwellen (A, B) erzeugten Signal (U),

**dadurch gekennzeichnet, dass**
die Dicke ($d_1$, $d_2$, $d_3$) der Seitenstruktur (21, 22) des Wellenleiters, definiert als Abstand zwischen der Innenfläche (215, 225) und einer Außenfläche (211, 221) der Seitenstruktur des Wellenleiters, und die Frequenz (f) der in der Seitenstruktur (21, 22) des Wellenleiters angeregten Schallwellen (B) in einer solchen Weise gewählt sind, dass eine erste Wellenmode, die ein erstes Signal des Empfängers (51, 52) hervorruft, und eine zweite Wellenmode, die ein zweites Signal des Empfängers (51) hervorruft, in der Seitenstruktur (21, 22) des Wellenleiters angeregt werden, wobei die Phasengeschwindigkeiten der ersten und der zweiten Wellenmode verschieden sind,
und
Eigenschaften des Mediums (3) unter Verwendung des ersten und des zweiten Signals bestimmt werden.

2. Verfahren nach Anspruch 1, **wobei** die erste Wellenmode eine Welle ist, die bewirkt, dass sich die Innenfläche und die Außenfläche (215, 225, 211, 221) der Seitenstruktur (21, 22) des Wellenleiters in entgegengesetzte Richtungen senkrecht zu der Ausbreitungsrichtung der zweiten Wellenmode bewegen.

3. Verfahren nach einem der vorhergehenden Ansprüche, **wobei** die erste Wellenmode eine symmetrische Lamb- oder Lamb-Rayleigh-Wellenmode ist und die zweite Wellenmode eine asymmetrische Lamb- oder Lamb-Rayleigh-Wellenmode ist.

4. Verfahren nach Anspruch 1, **wobei** die zweite Wellenmode eine Welle ist, die bewirkt, dass sich die Innenfläche und die Außenfläche (215, 225, 211, 221) der Seitenstruktur (21, 22) des Wellenleiters in dieselbe Richtung senkrecht zu der Ausbreitungsrichtung der ersten Wellenmode bewegen.

5. Verfahren nach einem der vorhergehenden Ansprüche, **wobei** die Dicke ($d_1$, $d_2$, $d_3$) der Seitenstruktur (21, 22) des Wellenleiters und die Frequenz (f) der in der Seitenstruktur des Wellenleiters angeregten Schallwellen in einer solchen Weise gewählt sind, dass die Steigung der zu der ersten Wellenmode gehörigen Dispersionskurve von der Steigung der zu der zweiten Wellenmode gehörigen Dispersionskurve verschieden ist.

6. Verfahren nach einem der vorhergehenden Ansprüche, **wobei** die Seitenstruktur (21, 22) des Wellenleiters eine Platte umfasst, in der die Schallwelle von dem Sender angeregt wird, wobei eine Innenfläche der Platte einen Abschnitt der Innenfläche der Seitenstruktur (21, 22) des Wellenleiters bildet und wobei der Sender (4) an einer Außenfläche der Platte angeordnet ist, wobei die Außenfläche von der Innenfläche der Platte abgewandt ist.

7. Verfahren nach einem der vorhergehenden Ansprüche, **wobei** die Verwendung des ersten und zweiten Signals zum Bestimmen von Eigenschaften des Mediums (3) das Bestimmen der Zeitverzögerung zwischen dem ersten und dem zweiten Signal, das Bestimmen der Amplitude des ersten und/oder des zweiten Signals, das Vergleichen der Zeitverzögerung zwischen dem ersten und dem zweiten Signal und/oder das Vergleichen der Amplitude des ersten und/oder des zweiten Signals mit vorbestimmten Werten umfasst, wobei insbesondere akustische Impulse von dem Sender (4) erzeugt werden, sodass gepulste Schallwellen in der Seitenstruktur (21, 22) des Wellenleiters angeregt werden.

8. Verfahren nach einem der vorhergehenden Ansprüche, **wobei** Wellen mit mindestens zwei unterschiedlichen Frequenzen in der Seitenstruktur (21, 22) des Wellenleiters angeregt werden, was erste und zweite Wellenmoden einer ersten Frequenz und erste und zweite Wellenmoden einer zweiten Frequenz hervorruft, und wobei die zu der ersten und der zweiten Frequenz gehörigen ersten und zweiten Signale jeweils ausgewertet werden.

9. Verfahren nach einem der vorhergehenden Ansprüche, **wobei** das Verfahren in einem ersten Schritt unter Verwendung eines ersten Wellenleiters mit einer Seitenstruktur (21, 22) einer ersten Dicke durchgeführt wird und in einem zweiten Schritt unter Verwendung eines zweiten Wellenleiters mit einer Seitenstruktur (21, 22) einer zweiten Dicke durchgeführt wird, wobei die zu dem ersten Wellenleiter gehörigen ersten und zweiten Signale und die zu dem zweiten Wellenleiter gehörigen ersten und zweiten Signale ausgewertet werden.

10. Vorrichtung zur Bestimmung von Eigenschaften eines Mediums und insbesondere zur Durchführung des Verfahrens nach einem der vorhergehenden Ansprüche, umfassend

a) einen akustischen Wellenleiter (2) mit einer Seitenstruktur (21, 22), die einen mit dem zu charakterisierenden Medium (3) gefüllten Innenraum begrenzt, sodass eine Innenfläche (215, 255) der Seitenstruktur (21, 22) eine Grenzfläche mit dem Medium (3) bildet, wenn es in dem Innenraum angeordnet ist,
b) einen Sender (4) zum Anregen von Schallwellen (B) in der Seitenstruktur (21, 22) des Wellenleiters,
c) einen Empfänger (51) zum Empfangen von Schallwellen (A, B), die von dem Sender (4) hervorgerufen wurden,

**dadurch gekennzeichnet, dass**
die Dicke ($d_1$, $d_2$, $d_3$) der Seitenstruktur (21, 22) des Wellenleiters und die Frequenz (f) der in der Seitenstruktur (21, 22) des Wellenleiters angeregten Schallwellen (B) in einer solchen Weise gewählt sind, dass eine erste Wellenmode, die ein erstes Signal des Empfängers (51) hervorruft, und eine zweite Wellenmode, die ein zweites Signal des Empfängers (51) hervorruft, in der Seitenstruktur (21, 22) des Wellenleiters angeregt werden, wobei die Phasengeschwindigkeiten der ersten und der zweiten Wellenmode verschieden sind, und
die Vorrichtung (1) Auswertungsmittel zum Bestimmen von Eigenschaften des Mediums (3) umfasst, die das erste und das zweite Signal auswerten.

11. Vorrichtung nach Anspruch 10, **wobei** die Seitenstruktur (21, 22) des Wellenleiters einen Abschnitt (22) umfasst, der von dem Sender (4) angeregt wird, wobei der angeregte Abschnitt (22) wenigstens eine erste und eine zweite Dicke ($d_1$, $d_2$) besitzt, wobei die Geschwindigkeit der in dem Bereich der ersten Dicke (di) angeregten ersten und zweiten Wellenmode von der Geschwindigkeit der in dem Bereich der zweiten Dicke ($d_2$) angeregten ersten und zweiten Wellenmode verschieden ist.

12. Vorrichtung nach Anspruch 11, **wobei** die Dicke des angeregten Abschnitts (22) der Seitenstruktur (21, 22) des Wellenleiters in einer Richtung senkrecht zu der Ausbreitungsrichtung der ersten und der zweiten Wellenmode konstant ist und entlang der Ausbreitungsrichtung zunimmt.

13. Vorrichtung nach Anspruch 11, wobei die Dicke des angeregten Abschnitts (22) der Seitenstruktur (21, 22) des Wellenleiters kontinuierlich oder periodisch schwankt oder der angeregte Abschnitt (22) der Seitenstruktur (21, 22) des Wellenleiters gewunden ausgebildet ist.

**Revendications**

1. Procédé pour déterminer les caractéristiques d'un milieu, comprenant les étapes qui consistent :

a) à fournir un guide d'onde acoustique (2) ayant une structure latérale (21, 22) délimitant un espace intérieur rempli du milieu (3) à caractériser de sorte qu'une surface intérieure (215, 225) de la structure latérale (21, 22) forme une interface avec le milieu (3),
b) à exciter des ondes acoustiques (B) dans la structure latérale de guide d'onde au moyen d'au moins un émetteur (4),
c) à convertir au moins une partie de l'énergie associée aux ondes acoustiques (B) excitées dans la structure latérale en ondes sonores de volume (A) du milieu (3),
d) à reconvertir au moins une partie de l'énergie associée aux ondes sonores de volume (A) en énergie d'onde acoustique de la structure latérale (21, 22) de guide d'onde, générant ainsi des ondes acoustiques dans la structure latérale de guide d'onde,
e) à recevoir des ondes acoustiques (A, B) produites par l'émetteur (4) par au moins un récepteur (51),
f) à déterminer des caractéristiques du milieu (3) à partir d'un signal (U) généré par le récepteur (51, 52) lors de la réception d'ondes acoustiques (A, B) produites par l'émetteur (4),

**caractérisé en ce que**
l'épaisseur ($d_1$, $d_2$, $d_3$) de la structure latérale (21, 22) de guide d'onde, définie comme étant la distance entre la surface intérieure (215, 225) et une surface extérieure (211, 221) de la structure latérale de guide d'onde, et la fréquence (f) des ondes acoustiques (B) excitées dans la structure latérale (21, 22) de guide d'onde sont choisies de sorte qu'un premier mode d'onde produisant un premier signal du récepteur (51, 52) et un deuxième mode d'onde produisant un deuxième signal du récepteur (51) soient excités dans la structure latérale (21, 22) de guide d'onde, où les vitesses de phase des premier et deuxième modes d'onde sont différentes, et

les caractéristiques du milieu (3) sont déterminées en utilisant les premier et deuxième signaux.

2.  Procédé tel que revendiqué dans la revendication 1, dans lequel le premier mode d'onde est une onde qui amène la surface intérieure et la surface extérieure (215, 225, 211, 221) de la structure latérale (21, 22) de guide d'onde à se déplacer dans des directions opposées perpendiculaires à la direction de propagation du deuxième mode d'onde.

3.  Procédé tel que revendiqué dans l'une des revendications précédentes, dans lequel le premier mode d'onde est un mode d'onde de Lamb-Rayleigh ou de Lamb symétrique et le deuxième mode d'onde est un mode d'onde de Lamb-Rayleigh ou de Lamb asymétrique.

4.  Procédé tel que revendiqué dans la revendication 1, dans lequel le deuxième mode d'onde est une onde qui amène la surface intérieure et la surface extérieure (215, 225, 211, 221) de la structure latérale (21, 22) de guide d'onde à se déplacer dans la même direction perpendiculaire à la direction de propagation du premier mode d'onde.

5.  Procédé tel que revendiqué dans l'une des revendications précédentes, dans lequel l'épaisseur ($d_1$, $d_2$, $d_3$) de la structure latérale (21, 22) de guide d'onde et la fréquence (f) des ondes acoustiques excitées dans la structure latérale de guide d'onde sont choisies de sorte que la pente de la courbe de dispersion associée au premier mode d'onde soit différente de la pente de la courbe de dispersion associée au deuxième mode d'onde.

6.  Procédé tel que revendiqué dans l'une des revendications précédentes, dans lequel la structure latérale (21, 22) de guide d'onde comprend une plaque dans laquelle l'onde acoustique est excitée par l'émetteur, où une surface intérieure de la plaque forme une section de la surface intérieure de la structure latérale (21, 22) de guide d'onde et où l'émetteur (4) est agencé au niveau d'une surface extérieure de la plaque, la surface extérieure étant opposée à la surface intérieure de la plaque.

7.  Procédé tel que revendiqué dans l'une des revendications précédentes, dans lequel l'utilisation des premier et deuxième signaux afin de déterminer les caractéristiques du milieu (3) comprend la détermination du retard entre les premier et deuxième signaux, la détermination de l'amplitude du premier signal et/ou du deuxième signal, la comparaison du retard entre les premier et deuxième signaux et/ou la comparaison de l'amplitude du premier signal et/ou du deuxième signal avec des valeurs prédéterminées, où, en particulier, des impulsions acoustiques sont générées par l'émetteur (4) de sorte que des ondes acoustiques pulsées soient excitées dans la structure latérale (21, 22) de guide d'onde.

8.  Procédé tel que revendiqué dans l'une des revendications précédentes, dans lequel des ondes d'au moins deux fréquences différentes sont excitées dans la structure latérale (21, 22) de guide d'onde produisant des premier et deuxième modes d'onde d'une première fréquence et des premier et deuxième modes d'onde d'une deuxième fréquence, et où les premier et deuxième signaux associés aux première et deuxième fréquences, respectivement, sont évalués.

9.  Procédé tel que revendiqué dans l'une des revendications précédentes, dans lequel, dans une première étape, le procédé est réalisé en utilisant un premier guide d'onde ayant une structure latérale (21, 22) d'une première épaisseur et dans une deuxième étape, le procédé est réalisé en utilisant un deuxième guide d'onde ayant une structure latérale (21, 22) d'une deuxième épaisseur, où les premier et deuxième signaux associés au premier guide d'onde et les premier et deuxième signaux associés au deuxième guide d'onde sont évalués.

10. Dispositif pour déterminer les caractéristiques d'un milieu et en particulier pour réaliser le procédé tel que revendiqué dans l'une des revendications précédentes, comprenant

    a) un guide d'onde acoustique (2) ayant une structure latérale (21, 22) délimitant un espace intérieur devant être rempli du milieu (3) à caractériser de sorte qu'une surface intérieure (215, 225) de la structure latérale (21, 22) forme une interface avec le milieu (3) lorsqu'il est agencé dans l'espace intérieur,
    b) un émetteur (4) pour exciter des ondes acoustiques (B) dans la structure latérale (21, 22) de guide d'onde,
    c) un récepteur (51) pour recevoir des ondes acoustiques (A, B) produites par l'émetteur (4),

    **caractérisé en ce que**
    l'épaisseur ($d_1$, $d_2$, $d_3$) de la structure latérale (21, 22) de guide d'onde et la fréquence (f) des ondes acoustiques (B) excitées dans la structure latérale (21, 22) de guide d'onde sont choisies de sorte qu'un premier mode d'onde produisant un premier signal du récepteur (51) et un deuxième mode d'onde produisant un deuxième signal du récepteur (51) soient excités dans la structure latérale (21, 22) de guide d'onde, où les vitesses de phase des premier et deuxième modes d'onde sont différentes, et le dispositif (1) comprend des moyens d'évaluation pour déterminer les caractéristiques du milieu (3) évaluant les premier et deuxième signaux.

11. Dispositif tel que revendiqué dans la revendication 10, dans lequel la structure latérale (21, 22) de guide d'onde comprend une partie (22) qui est excitée par l'émetteur (4), où la partie excitée (22) a au moins des première et deuxième épaisseurs ($d_1$, $d_2$), où la vitesse des premier et deuxième modes d'onde excités, qui sont excités dans la zone de la première épaisseur ($d_i$) est différente de la vitesse des premier et deuxième modes d'onde excités dans la zone de la deuxième épaisseur ($d_2$).

12. Dispositif tel que revendiqué dans la revendication 11, dans lequel l'épaisseur de la partie excitée (22) de la structure latérale (21, 22) de guide d'onde est constante dans une direction perpendiculaire à la direction de propagation des premier et deuxième modes d'onde et augmente le long de la direction de propagation.

13. Dispositif tel que revendiqué dans la revendication 11, dans lequel l'épaisseur de la partie excitée (22) de la structure latérale (21, 22) de guide d'onde varie de manière continue ou périodique, ou la partie excitée (22) de la structure latérale (21, 22) de guide d'onde est formée de manière sinueuse.

## FIG 1A

## FIG 1B

15

EP 2 338 047 B1

# FIG 2A

# FIG 2B

# FIG 2C

# FIG 3

FIG 4A

FIG 4B

# FIG 4C

# FIG 5

**EP 2 338 047 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6513365 B1
- WO 2008034878 A2
- WO 02077635 A2
- EP 0212470 A2